# EUROPÄISCHE PATENTSCHRIFT

(11) **EP 1 821 091 B1**
(45) Veröffentlichungstag und Bekanntmachung des Hinweises auf die Patenterteilung: **16.03.2011**
(21) Anmeldenummer: 06002983.2
(22) Anmeldetag: 15.02.2006
(51) Int. Cl.: G01L 9/00

(54) **Verfahren zur Herstellung von elektronischen Bauelementen und Drucksensor**
Method of producing electronic components and pressure sensor
Procédé de fabrication de composants électroniques et capteur de pression

(43) Veröffentlichungstag der Anmeldung: 22.08.2007
(73) Patentinhaber: Grundfos Management A/S, 8850 Bjerringbro (DK)
(72) Erfinder: Krog, Jens Peter, Torup 8860 Ulstrup (DK); Eriksen, Gert Friis, 2670 Greve (DK); Dyrbye, Karsten, 8600 Silkeborg (DK)
(74) Vertreter: Vollmann, Heiko

(56) Entgegenhaltungen:
- DE-A1- 4 415 984
- DE-U1- 29 724 622

## Beschreibung

Die Erfindung betrifft ein Verfahren zur Herstellung von elektronischen Sensoren zur Druck und/oder Differenzdruckmessung gemäß den im Oberbegriff des Anspruchs 1 angegebenen Merkmalen sowie einen derartigen Druck- oder Differenzdrucksensor gemäß den im Oberbegriff des Anspruchs 5 angegebenen Merkmalen.

Elektronische Bauelemente, insbesondere zum Einsatz als Druck- oder Differenzdrucksensor sind beispielsweise aus DE 297 24 622 U1 bekannt. Sie bestehen aus einem Halbleitersubstrat, das in dem Bereich, welcher den späteren Membranbereich des Sensors bilden soll, ausgedünnt ausgebildet ist. In diesem Bereich sind auch die eigentlichen Messelemente in Form von Widerständen ausgebildet, welche typischerweise zu einer Messbrücke geschaltet sind und im späteren Einsatz aufgrund der Membrandehnung ihre Widerstandseigenschaften ändern, was wiederum als Maß für den anstehenden Druck zur elektronischen Auswertung herangezogen wird. Das Siliziumsubstrat sowie die darin ausgebildeten Messelemente sind an der Ober- bzw. Unterseite des Substrats jeweils mit einer isolierenden Schicht, typischerweise eine Oxidschicht versehen, die wiederum mit einer korrosionsfesten Metallschicht, typischerweise einer Chrom-Tantal-Schicht überzogen ist. Diese Metallschicht erstreckt sich bei bekannten Bauelementen zu beiden Seiten bis zum Rand und ist lediglich im Bereich der Anschlusskontakte unterbrochen.

Derartige elektronische Bauelemente werden nicht einzeln, sondern typischerweise in Form von Wafern hergestellt, d.h. es werden eine Vielzahl elektronischer Bauelemente nebeneinander liegend in dem Siliziumsubstrat bzw. auf dem Siliziumsubstrat ausgebildet, wonach die isolierende Schicht aufgetragen und schließlich die schützende Metallschicht aufgebracht wird. Die so gebildete Vielzahl von elektronischen Bauelementen wird dann mechanisch in einzelne Bauelemente getrennt. Dieses Verfahren wird in der Halbleitertechnik seit langem angewandt und hat sich bewährt. Auch die aus DE 44 15 984 A1 bekannten Halbleitersensoren, die als Drucksensoren ausgebildet sind, weisen eine Schutzschicht auf, um den Membranbereich gegenüber aggressiven Medien zu schützen. Auch die dort beschriebenen Sensoren werden zunächst in einem Wafer hergestellt und erst nach Aufbringen der Schutzschichten in einzelne Drucksensoren geteilt.

Allerdings stellt sich bei der Herstellung von elektronischen Sensoren zur Druck- und/oder Differenzdruckmessung, welche mit einer korrosionsfesten Metallschicht versehen werden müssen, das Problem, dass beim Zerteilen des Wafers, also beim Trennen der einzelnen Bauelemente die Metallschicht randseitig nicht immer glatt abgeschnitten wird, sondern Schmiereffekte auftreten, Metallpartikel in Bereiche zwischen Anschlusskontakten und Metallschicht bzw. in den Bereich der Stirnseiten gelangen. Auch kann beim Zertrennen die isolierende Schicht im Randbereich beschädigt werden, wodurch die Metallschicht unmittelbar auf dem Substrat zur Anlage kommt und Kriechströme entstehen können. Hierdurch können die elektrischen Eigenschaften der so gebildeten Bauelemente beeinträchtigt werden. Zumindest führt dies dazu, dass die so gebildeten elektronischen Bauelemente eine vergleichsweise große Toleranz aufweisen, was nachteilig ist.

Vor diesem Hintergrund liegt der Erfindung die Aufgabe zugrunde, ein gattungsgemäßes Verfahren so auszubilden, dass die vorgenannten Nachteile vermindert, insbesondere die dadurch möglicherweise ausgelösten Kriechströme unterbunden werden.

Diese Aufgabe wird gemäß der Erfindung durch ein Verfahren mit den im Anspruch 1 angegebenen Merkmalen gelöst. Vorteilhafte Ausgestaltungen des erfindungsgemäßen Verfahrens sind in den Unteransprüchen angegeben.

Ein mit dem erfindungsgemäßen Verfahren hergestelltes elektronisches Bauelement in Form eines Druck- oder Differenzdrucksensors ist durch die Merkmale des Anspruchs 5 gekennzeichnet, vorteilhafte Ausgestaltungen dieses Bauelements sind durch die Merkmale der Unteransprüche 6 und 7 gekennzeichnet. Weitere vorteilhafte Ausgestaltungen der Erfindung sind in der nachfolgenden Beschreibung sowie der Zeichnung angegeben.

Das erfindungsgemäße Verfahren sieht vor, dass zunächst auf einem Wafer die Halbleiterstrukturen der elektronischen Sensoren zur Druck-und/oder Differenzdruckmessung erzeugt werden, wonach mindestens eine isolierende Schicht, z. B. eine Oxidschicht sowie nachfolgend mindestens eine schützende Metallschicht aufgebracht wird. Gemäß der Erfindung wird die Metallschicht jedoch abschnittsweise und nur in den Bereichen des Wafers aufgebracht, in denen später keine Teilung des Wafers mehr erfolgt. Statt die Metallschicht abschnittsweise aufzutragen kann diese alternativ vollflächig auf den Wafer, beispielsweise durch Aufdampfen aufgetragen werden, wobei danach zumindest in den Bereichen, in denen später die Zerteilung des Wafers erfolgt, die Metallschicht vor der Zerteilung entfernt wird. Es wird der Abstand der Metallschicht zur nächstliegenden Umfangskante so gering gewählt, dass der Membranbereich sowie der diesen umgebende Einspannbereich durch die Metallschicht geschützt ist und so groß gewählt wird, dass sichergestellt ist, dass der spätere Trennvorgang außerhalb der Metallschicht erfolgt. Bei beiden Verfahren ist also stets sichergestellt, dass vor dem Zerteilen des Wafers in den Bereichen der späteren Trennfugen keine Metallschicht vorhanden ist. Danach werden die so gebildeten elektronischen Sensoren durch Schneiden des Wafers aus dem Verbund gelöst.

Grundgedanke der vorliegenden Erfindung ist es also, in den Bereichen, in welchen der Wafer zur Bildung der einzelnen elektronischen Bauelemente nach dem erfolgten Fertigungsprozess zerteilt wird, nicht mit einer Metallschicht zu versehen bzw. dort die Metallschicht gezielt zu entfernen, und dabei den Abstand der Metallschicht zur nächstliegenden Umfangskante so gering zu wählen, dass der Membranbereich sowie der diesen umgebende Einspannbereich durch die Metallschicht geschützt ist und so groß zu wählen, dass sichergestellt ist, dass der spätere Trennvorgang außerhalb der Metallschicht erfolgt, so dass beim späteren Durchtrennen des Wafers auch keine Metallschicht durchtrennt werden muss. Das hat den Vorteil, dass die Metallschicht nicht zerteilt werden muss und damit auch nicht die eingangs geschilderten nachteiligen Effekte auftreten, welche zu einer vergleichsweisen großen Toleranz der elektrischen Eigenschaften der so gebildeten elektronischen Sensoren führen. Das erfindungsgemäße Verfahren ermöglicht also durch das gezielte Aufbringen der Metallschicht nur in den Bereichen, in denen später keine Teilung des Wafers mehr erfolgt, die Toleranz der elektrischen Eigenschaften der so gebildeten Bauelemente erheblich zu verringern und somit die Qualität der Bauelemente zu höhen, ohne den Fertigungsprozess merklich zu verteuern oder aufwendiger zu gestalten, da die Metallschicht ohnehin nicht deckend, sondern stets abschnittsweise vorgesehen werden muss, da beispielsweise im Bereich der elektrischen Kontakte ohnehin auch schon bisher eine Aussparung vorgesehen sein musste.

Fertigungstechnisch günstig ist es, den Wafer vollflächig durch Aufdampfen mit einer Metallschicht zu versehen und dann diese abschnittsweise durch chemischen oder elektrochemischen Prozess, vorteilhaft durch Ätzen zu entfernen, Das abschnittsweise Entfernen der Metallschicht kann alternativ auch durch geeignete thermische Einwirkung, beispielsweise durch Laserstrahlung erfolgen.

Es kann jedoch auch vorteilhaft sein, die Metallschicht von vornherein abschnittsweise aufzudampfen, dann werden vorteilhaft vor dem Aufbringen der Metallschicht durch Maskierung die Bereiche abgedeckt, in denen die spätere Zerteilung des Wafers erfolgt. Die Maskierung sorgt dafür, dass die Metallschicht nicht haftet, so dass in den maskierten Bereichen keine Metallschicht aufgebracht wird.

Wenn die Metallschicht mit ausreichendem Abstand zur späteren Trennfuge bzw. zu der dort dann umfangsseitig gebildeten Stirnseite endet, dann kann grundsätzlich eine weitere Bearbeitung dieser durch das Trennen gebildeten schmalen Stirnseiten entfallen. Wenn aber, beispielsweise aus Platzgründen der verbleibende Abstand der Metallschicht zur Trennfuge vergleichsweise gering ist, dann kann es insbesondere von Vorteil sein, wenn nach dem Zerteilen des Wafers die durch das Zerteilen gebildeten Stirnseiten versiegelt werden, beispielsweise durch eine aushärtende beim Aufbringen flüssige Versiegelung, welche elektrisch isolierende Wirkung hat. Diese Verslegelung schützt nicht nur die schmalen durch das Trennen gebildeten Stirnseiten des jeweiligen Bauelementes, sondern sorgt dafür, dass etwaige Beschädigungen, insbesondere mikroskopische Ausbrüche im Randbereich der isolierenden Schicht ausgefüllt werden, so dass sich auch in diesem Bereich keine merklichen Kriechströme ausbilden können.

Der so gebildete elektronische Sensor gemäß der Erfindung ist dadurch gekennzeichnet, dass seine zumindest zu einer Seite bestehende schützende Metallschicht allseits mit Abstand zu der nächstliegenden Umfangskante endet. Es versteht sich, dass der Abstand zur nächstliegenden Umfangskante einerseits so gering gewählt wird, dass in jedem Fall sichergestellt ist, dass der zu schützende Bereich, bei einem Differenzdruck- oder Drucksensor ist dies typischerweise der Membranbereich sowie der diesem umgebende Einspannbereich, durch die Metallschicht geschützt ist, andererseits so groß ist, dass sichergestellt ist, dass der spätere Trennvorgang außerhalb der Metallschicht erfolgt.

Bei einem Differenzdrucksensor, bei welchem die durch Ausdünnung des Siliziumsubstrats gebildete Membran beidseitig druckbeaufschlagt ist, ist auch zu beiden Seiten eine schützende Metallschicht vorgesehen, welche nicht nur die Membran selbst, sondern auch den unmittelbar benachbarten Bereich, vorteilhaft über die Einspannstelle hinausgehend umfasst, damit das Bauelement zuverlässig gegen Einflüsse von Außen geschützt ist. Einspannstelle im vorgenannten Sinn ist nicht zwingend die Stelle, an welcher das Bauelement mechanisch gehalten ist, sondern die Stelle, an welcher das Bauelement gegenüber dem Medium, dessen Druck bzw. Differenzdruck zu messen ist, abgedichtet ist.

Besonders vorteilhaft ist es, wenn der erfindungsgemäße elektronische Sensor an seinen Stirnseiten, d. h. an den durch Trennen aus dem Wafer gebildeten Seiten mit einer Versiegelung versehen ist. Eine solche Versiegelung ist zweckmäßig so ausgelegt, dass sie in flüssiger Form aufgetragen werden kann und nach Aushärtung/Trocknung eine elektrisch isolierende sowie ggf. das Substrat gegen äußere Einflüsse schützende Schicht bildet. Es versteht sich, dass das erfindungsgemäße Verfahren auch für solche ggf. nicht aus Metall bestehende Schichten angewendet werden kann, bei denen sich ein ähnlicher Effekt beim späteren Zerteilen einstellt.

Die Erfindung ist nachfolgend anhand eines in der Zeichnung dargestellten Ausführungsbeispiels näher erläutert. Es zeigen:
- Fig. 1: in stark vereinfachter schematischer Schnittdarstellung ein elektronisches Bauelement in Form eines Differenzdruck- sensors mit Einspannung
- Fig. 2: eine Draufsicht auf ein elektronisches Bauelement gemäß Fig. 1 und
- Fig. 3: einen Schnitt durch einen Abschnitt eines Wafers im Be- reich von zwei nebeneinander liegenden elektronischen Bauelementen.

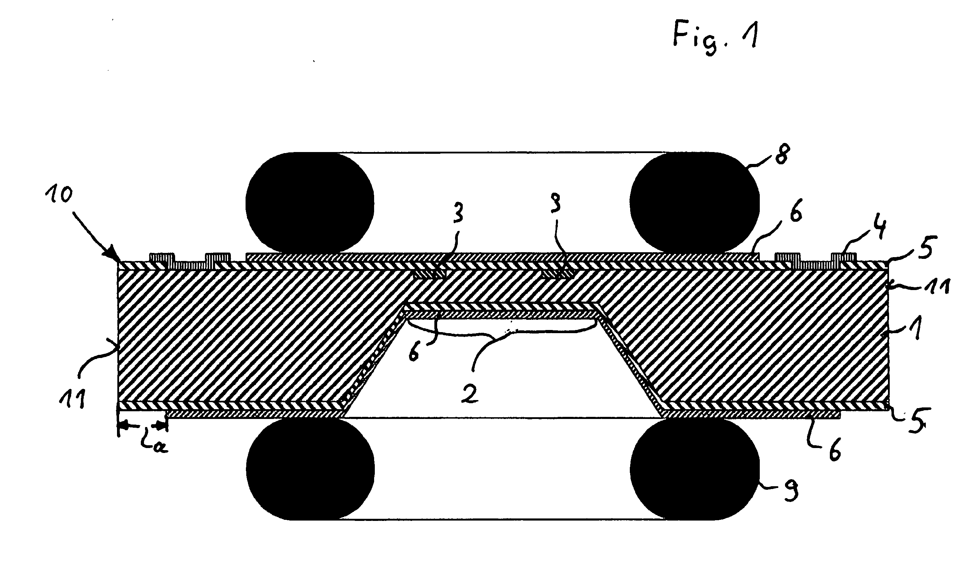

Bei dem dargestellten elektronischen Bauelement handelt es sich um einen Differenzdrucksensor, der aus einen Siliziumsubstrat 1 aufgebaut ist, das dort, wo die eigentliche Membran des späteren Sensors entsteht, ausgedünnt ist. Dieser Membranbereich ist mit 2 gekennzeichnet. In diesem Membranbereich 2 sind an der Oberseite gemäß Darstellung nach Fig. 1 im Siliziumsubstrat 1 elektronische Bauteile in Form von Widerständen 3 ausgebildet, die in an sich bekannter Weise zu einer (nicht im Einzelnen dargestellten) Messbrücke verschaltet sind, deren elektrische Anschlüsse in Form von Kontakten 4 an der Oberseite des Siliziumsubstrats 1 herausgeführt sind. Diese Kontakte 4 bestehen aus Aluminium, ebenso wie die in gleicher Weise gebildeten (nicht dargestellten) Leiterbahnen zu den Widerständen 3 sowie den weiteren hier nicht im Einzelnen beschriebenen elektronischen Bauteilen der Bauelemente.

Beidseitig ist das Siliziumsubstrat 1 mit den darin ausgebildeten Widerständen 3, Bauteilen sowie den darauf befindlichen Leiterbahnen durch je eine isolierende Oxidschicht abgedeckt, die lediglich durch die Kontakte 4 durchbrochen wird.

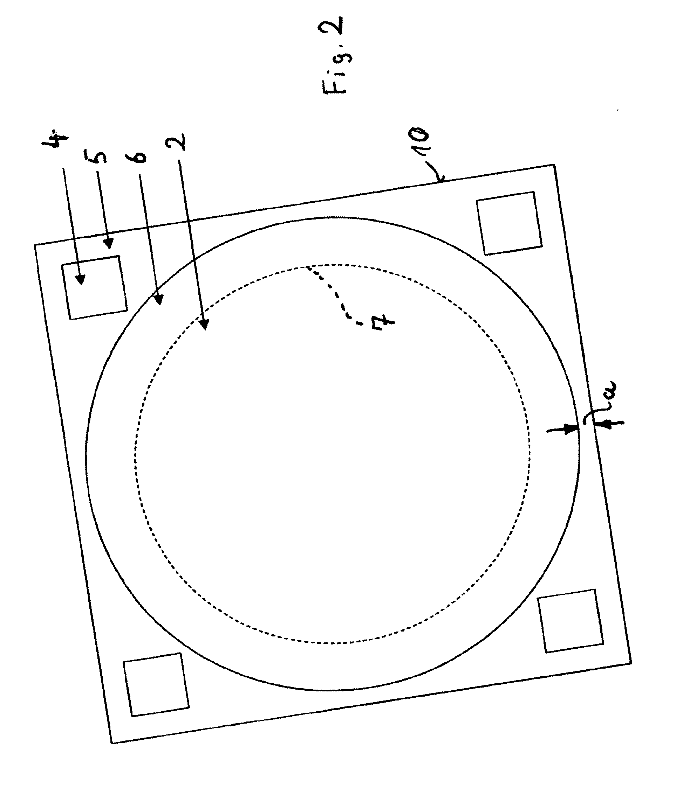

Die Oxidschicht 5 wiederum ist durch eine korrosionsbeständige Metallschicht 6 in Form einer aus einer Chrom-Tantal-Legierung gebildeten Metallschicht 6 abgedeckt. Die Metallschicht 6 ist nicht nur im Membranbereich 2 vorgesehen, sondern reicht seitlich über den Einspannbereich 7 hinaus und endet mit Abstand zu der nächstliegenden Umfangskante 10 des durch das Siliziumsubstrat 1 mit seinen Ausbildungen gebildeten elektronischen Bauelementes. Der Einspannbereich 7 ist in Fig. 2 durch eine unterbrochene Linie dargestellt. Er ergibt sich aus der Darstellung nach Fig. 1, in welcher zwei O-Ringe 8 und 9 dargestellt sind, welche in der späteren Einbaulage die Einspannung zum dichten Eingliedern des Bauelements in ein Gehäuse bilden. Diese O-Ringe 8, 9 dichten dann den eigentlichen Membranbereich 2, welcher durch die Metallschicht 6 beidseitig geschützt ist, gegenüber den Randbereichen ab. Diese O-Ringe 8 und 9 liegen typischerweise innerhalb eines Sensorgehäuses, über welches die Fluidbeaufschlagung zu beiden Seiten der Membran 2 erfolgt.

Das anhand der Figuren 1 und 2 dargestellte Bauelement weist ein Siliziumsubstrat quadratischer Form auf. Die Kontakte 4 zum elektrischen Anschluss des Bauelementes liegen in den Eckbereichen. Die Metallschicht 6 ist, wie Fig. 2 zeigt, kreisförmig ausgebildet, derart, dass die Kontakte 4 außerhalb der Kreisfläche liegen, wobei der Durchmesser des Kreises deutlich kleiner als die Seitenlänge des Bauelements gewählt ist, so dass stets ein Mindestabstand a zur nächstliegenden Auβenkante 10 des Substrates 1 gebildet ist. Die Metallschicht 6 an der Unterseite kann hingegen quadratisch entsprechend der Substratform ausgebildet sein, wobei dort die Kantenlänge des Quadrates der Metallschicht 6 zweckmäßigerweise dem Durchmesser des Kreises der Metallschicht 6 auf der anderen Seite entspricht, um auch hier einen Mindestabstand a zur nächstliegenden Umfangskante 10 zu gewährleisten.

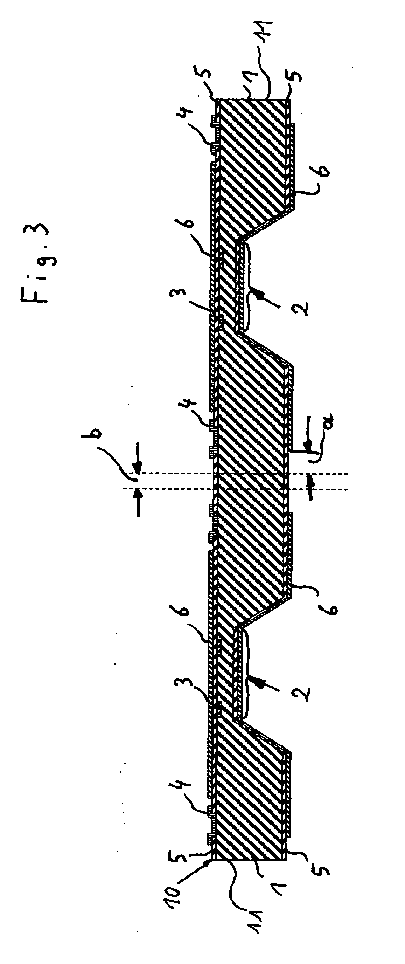

Die vorbeschriebene Ausbildung der Metallschichten 6 mit Abstand zur Umfangskante 10 hat den Vorteil, dass für die Kontakte 4 keine besonderen Freistellen geschaffen werden müssen, andererseits jedoch sichergestellt ist, dass innerhalb eines Wafers (in Fig. 3 sind zwei Bauelemente innerhalb eines Wafers vor dem Durchtrennen dargestellt) stets sichergestellt ist, dass der Bereich b, in welchem die Durchtrennung des Wafers zu einzelnen Bauelementen erfolgt, nicht von der Metallschicht 6 bedeckt ist.

In Fig. 3 sind beispielhaft zwei Bauelemente so dargestellt, wie sie innerhalb des Wafers benachbart angeordnet sind. Beim Durchtrennen des Wafers nach Abschluss des eigentlichen Fertigungsprozesses der Bauelemente wird der dort mit b gekennzeichnete Bereich herausgetrennt, wodurch der Verbund der Bauelemente getrennt wird. Da in diesem Bereich keine Metallschicht vorhanden ist, treten die eingangs beschriebenen Schmiereffekte und Verunreinigungen durch Metallteile nicht mehr auf. Wie die Fig. 3 deutlich zeigt, enden die Metallschichten 6 mit einem Abstand a zu diesem Bereich b, so dass für die Schnittfuge ein gewisser Toleranzbereich gebildet ist, der stets sicherstellt, dass beim Schneidvorgang die Metallschicht 6 unberührt bleibt.

Die durch den Schneidvorgang gebildeten Stirnseiten 11 sind mit einer Versiegelung versehen, die das Substrat auch in diesem Bereich elektrisch isoliert und schützt. Da durch den Trennvorgang (sei es mechanisch oder durch Laserschneiden) nahe der Umfangskante 10 auch Teile der isolierenden Oxidschicht 5 herausgebrochen werden können, ist die Versiegelung so ausgelegt, dass sie an die isolierende Oxidschicht 5 anschließt, d. h. über die Umfangskante 10 hinausgeht und diese ggf. herausgebrochenen Teile der isolierenden Schicht 5 ersetzt.

### Bezugszeichenliste

- 1: Siliziumsubstrat
- 2: Membranbereich
- 3: Widerstände
- 4: Kontakte
- 5: Isolierende Oxidschicht
- 6: Metallschicht
- 7: Einspannbereich
- 8: O-Ring oben
- 9: O-Ring unten
- 10: Umfangskante
- 11: Stirnseiten

- a: Mindestabstand
- b: Bereich der Trennstelle des Wafers

## Patentansprüche

1. Verfahren zur Herstellung von elektronischen Sensoren zur Druck- und/oder Differenzdruckmessung, bei dem zunächst auf einem wafer die Halbleiterstrukturen(3) der elektronischen Sensoren erzeugt werden, wonach mindestens eine isolierende Schicht (5) sowie nachfolgend mindestens eine schützende Metallschicht (6) aufgebracht wird, wonach der Wafer (1) in die so gebildeten Sensoren zerteilt wird, **dadurch gekennzeichnet, dass** die Metallschicht (6) entweder abschnittweise und nur in den Bereichen des Wafers (1) aufgebracht wird, in denen später keine Zerteilung des Wafers (1) mehr erfolgt oder zumindest in den Bereichen, in denen später die Zerteilung des Wafers (1) erfolgt, die Metallschicht(6) vor der Zerteilungentfernt wird, wobei der Abstand (a) der Metallschicht (6) zur nächstliegenden Umfangskante (10) so gering gewählt wird, dass der Membranbereich (2) sowie der diesen umgebende Einspannbereich (7) durch die Metallschicht (6) geschützt ist und so groß gewählt wird, dass sichergestellt ist, dass der spätere Trennvorgang außerhalb der Metallschicht (6) erfolgt.

2. Verfahren nach Anspruch 1, **dadurch gekennzeichnet, dass** das abschnittsweise Entfernen der Metallschicht(6) durch Ätzen oder durch Einwirkung von Laserstrahlung erfolgt.

3. Verfahren nach Anspruch 1, **dadurch gekennzeichnet, dass** vor dem Aufbringen der Metallschicht (6) durch Maskierung mindestens die Bereiche abgedeckt werden, in denen die spätere Zerteilung des Wafers (1) erfolgt.

4. Verfahren nach einem der vorhergehenden Ansprüche, **dadurch gekennzeichnet, dass** nach dem Zerteilen des Wafers (1) die durch das Zerteilen gebildeten Stirnseiten (11) versiegelt werden.

5. Druck- oder Differenzdrucksensor, der durch Trennen aus einem Wafer(1) gebildet ist und mindestens eine schützende Metallschicht (6) aufweist, **dadurch gekennzeichnet, dass** die schützende Metallschicht (6) allseits mit Abstand (a) zu der nachstliegenden Umfangskante (10) endet, wobei der Membranbereich (2) und der diesen umgebende Einspannbereich (7) durch die Metallschicht (6) geschützt ist.

6. Druck- oder Differenzdrucksensor nach Anspruch 5, **dadurch gekennzeichnet, dass** der Sensor einen zumindest einseitig ausgedünnten Bereich (2) aufweist, in welchem die den Sensor bildenden Halbleiterstrukturen (3) gebildet sind und dass beide Seiten dieses ausgedünnten Bereichs (2) mit einer schützenden Metallschicht (6) versehen sind, wobei beide Metallschichten (6) allseits mit Abstand (a) zur jeweils nächstliegenden Umfangskante (10) enden.

7. Sensor nach Anspruch 5 oder 6, **dadurch gekennzeichnet, dass** die Stirnseiten (11) mit einer Versiegelung versehen sind.

## Claims

1. A method for manufacturing electronic sensors for pressure measurement and/or differential pressure measurement, with which firstly the semiconductor structures (3) of the electronic sensors are produced on a wafer, whereupon at least one insulating layer (5) as well as subsequently at least one protective metal layer (6) are deposited, whereupon the wafer (1) is divided into the thus formed sensors, **characterised in that** the metal layer (6) is either deposited in sections or only in the regions of the wafer (1), in which no division of the wafer (1) is effected later or at least in the regions, in which the division of the wafer (1) is later effected, the metal layer (6) is removed before the division, wherein the distance (a) of the metal layer (6) to the next-lying peripheral edge (10) is selected so small, that the membrane region (2) as well as the fixation region (7) surrounding this are protected by the metal layer (6) and is selected so large that it is ensured that the later separation procedure is effected outside the metal layer (6).

2. A method according to claim 1, **characterised in that** the sectional removal of the metal layer (6) is effected by way of etching or by way of the effect of laser radiation.

3. A method according to claim 1, **characterised in that** at least the regions, in which the later division of the wafer (1) is effected, are covered by way of masking, before the deposition of the metal layer (6).

4. A method according to one of the preceding claims, **characterised in that** the end-sides (11) formed by the division are sealed after the division of the wafer (1).

5. A pressure sensor or differential pressure sensor which is formed by way of separation from a wafer (1) and which comprises at least one protective metal layer (6), **characterised in that** the protective metal layer (6) on all sides ends at a distance (a) to the next-lying peripheral edge (10), wherein the membrane region (2) and the fixation region (7) surrounding this, are protected by the metal layer (6).

6. A pressure sensor or differential pressure sensor according to claim 5, **characterised in that** the sensor has a region (2) which is thinned out at least on one side and in which the semiconductor structures (3) forming the sensor are formed, and that both sides of this thinned-out region (2) are provided with a protective metal layer (6), wherein both metal layers (6) on all sides end at a distance (a) to the respective next-lying peripheral edge (10).

7. A sensor according to claim 5 or 6, **characterised in that** the end-sides (11) are provided with a sealing.

## Revendications

1. Procédé de fabrication de capteurs électroniques pour la mesure de pression et/ou de pression différentielle, dans lequel sont tout d'abord créées sur une plaquette les structures semi-conductrices (3) des capteurs électroniques, puis on applique au moins une couche isolante (5) et ensuite au moins une couche métallique de protection (6), après quoi la plaquette (1) est découpée en capteurs ainsi formés, **caractérisé en ce que**, soit la couche métallique (6) est appliquée par sections et uniquement dans les régions de la plaquette (1) dans lesquelles on ne procède plus ultérieurement à une découpe de la plaquette (1), soit la couche métallique (6) est éliminée avant la découpe au moins dans les régions dans lesquelles on procède ultérieurement à la découpe de la plaquette (1), la distance (a) entre la couche métallique (6) et le bord périphérique (10) le plus proche étant choisie suffisamment petite pour que la région de membrane (2) ainsi que la zone d'encastrement (7) entourant celle-ci soient protégées par la couche métallique (6) et suffisamment grande pour garantir que l'opération de division ultérieure s'effectue à l'extérieur de la couche métallique (6).

2. Procédé selon la revendication 1, **caractérisé en ce que** l'élimination par sections de la couche métallique (6) s'effectue par gravure ou sous l'effet d'un faisceau laser.

3. Procédé selon la revendication 1, **caractérisé en ce qu'**avant l'application de la couche métallique (6) sont recouvertes par masquage au moins les régions dans lesquelles a lieu la division ultérieure de la plaquette (1).

4. Procédé selon l'une des revendications précédentes, **caractérisé en ce qu'**après la division de la plaquette (1) les faces avant (11) formées par la découpe sont scellées.

5. Capteur de pression ou de pression différentielle formé par division d'une plaquette (1) et qui présente au moins une couche métallique de protection (6), **caractérisé en ce que** la couche métallique de protection (6) se termine de tous côtés à une distance (a) par rapport au bord périphérique (10) le plus proche, la région de membrane (2) et la région d'encastrement (7) entourant celle-ci étant protégées par la couche métallique (6).

6. Capteur de pression ou de pression différentielle selon la revendication 5, **caractérisé en ce que** le capteur présente une région (2) amincie au moins d'un côté, dans laquelle sont formées les structures semi-conductrices (3) formant le capteur et **en ce que** les deux côtés de cette région (2) amincie sont pourvus d'une couche métallique de protection (6), les deux couches métalliques (6) se terminant de tous côtés à une distance (a) par rapport au bord périphérique (10) respectivement le plus proche.

7. Capteur selon la revendication 5 ou 6, **caractérisé en ce que** les faces avant (11) sont pourvues d'un scellement.
